# EUROPEAN PATENT APPLICATION

(11) **EP 2 434 335 A2**
(43) Date of publication of application: **28.03.2012**
(21) Application number: 11195688.4
(22) Date of filing: 29.09.2005
(51) Int. Cl.: G02F 1/13357, F21V 8/00, F21S 8/04

(54) **Light source unit for backlight, backlight device for liquid crystal display,and transmissive liquid crystal display device**

(30) Priority: 08.10.2004 JP 2004297011; 17.02.2005 JP 2005041167
(62) Divisional of application: 05788184.9
(71) Applicant: Sony Corporation, Tokyo 108-0075 (JP)
(72) Inventor: Arai, Takeo, Saitama, 3460035 (JP); Oku, Takashi, Tokyo, 108-0075 (JP)
(74) Representative: Tyson, Robin Edward

(57) **Abstract**

A liquid crystal display backlight light source device for illuminating a transmissive color liquid crystal display panel from the backside thereof, said liquid crystal display backlight light source device comprising: a plural number of light emitting diodes arrayed on a substrate in two rows of equal pitch, the arraying periods of which are shifted relative to each other by one-half pitch, wherein the light emitting diodes are divided into units, separated from each other by reflecting planes, such that each unit is a trapezoidal shape.

## Description

### Technical Field

This invention relates to a backlight device for a color liquid crystal display for illuminating display light radiated from larger numbers of light emitting diodes to a color liquid crystal display panel of, for example, a transmissive color liquid crystal display (LCD) apparatus, for illumination from its backside, and to a transmissive color liquid crystal display apparatus employing this backlight device for color liquid crystal display.
The present application claims the rights of priority based on the Japanese Patent Application 2004-297011, filed in Japan on October 8, 2004, and on the Japanese Patent Application 2005-041167, filed in Japan on February 17, 2005. The contents of these Japanese Patent Applications are to be incorporated by reference into the present application.

### Background Art

A liquid crystal display allows for a large-sized display surface, reduced weight and thickness, and low power consumption, compared to the cathode ray tube (CRT), and hence is used as a display of a TV receiver or various sorts of display, like a self-light-emitting PDP (Plasma Display Panel), for example. In a liquid crystal display apparatus, liquid crystal is sealed in a space between two transparent substrates of various sizes, and the electrical voltage is applied across the transparent electrodes to change the orientation of the liquid crystal molecules and light transmittance to make optical display of a preset picture or the like.
Since the liquid crystal itself does not emit light, a backlight unit, operating as a light source, is provided on the backside of a liquid crystal panel, for example. The backlight unit includes a primary light source, a light guide plate, a reflective film, a lens sheet or a diffusing plate, and supplies display light on the entire surface of the liquid crystal panel. The backlight unit includes, as primary light source, a cold cathode fluorescent lamp (CDLF), containing mercury or xenon, enclosed in a fluorescent tube, It is however necessary to solve the problems inherent to the cold cathode fluorescent lamp, such as low brightness in emission light, short service life or low symmetry ascribable to a low luminance area on the cathode side.
Meanwhile, a large sized liquid crystal display is provided with an area-lit configuration backlight device, including a plural number of elongated cold cathode fluorescent lamps, on the backside surface of the diffusing plate, for supplying display light to the liquid crystal panel. With such area-lit configuration backlight device, it is similarly necessary to solve the aforementioned problem related with the use of the cold cathode fluorescent tube. The necessity for achieving high luminescence or high symmetry is felt more keenly in particular if the display is applied to a large-sized TV receiver with 40-inch size or larger.
On the other hand, in the area-lit configuration backlight device, an LED area-lit backlight, in which a large number of light emitting diodes, referred to below as LEDs, emitting three prime colors, namely red, green and blue, are arrayed two-dimensionally on the back surface side of the diffusing plate, in place of the aforementioned cold cathode fluorescent lamps, in order to generate white light, is stirring up notice. In such LED backlight device, the production cost may be reduced as the cost for LEDs is lowered, while it may be possible to make high luminance display on a large-size liquid crystal panel with low power consumption.
In a variety of backlight devices, optical sheet blocks for effecting function conversion and homogenization of the display light radiated from a light source, and a variety of optical components, such as diffusing light guide plates, light diffusing plates or reflective sheets, are provided between the light source units and the transmissive liquid crystal panel. The light diffusing plate, used in the backlight device, is formed from e.g. acrylic resin, exhibiting light transmittivity in general, and is provided with a light controlling pattern of partially transmitting and partially reflecting the incident display light at a location facing the light source. The Japanese Laid-Open Patent Publication H6-301034 shows such a light diffusing plate. The light diffusing plate, shown in this Laid-Open Patent Publication, includes a strip-shaped light controlling pattern, formed by numerous reflecting dots, in a zone facing the fluorescent tubes. This light diffusing plate is formed so that the dot size becomes smaller the more the plate is spaced apart from the axis of the fluorescent tube. Thus, the more the light diffusing plate is spaced apart from the fluorescent tube, the higher becomes the light transmittance to enable the uniform illuminating light to be radiated on the whole.

### Disclosure of the Invention

### Problems to be solved by the Invention

Among the LED backlight devices, including a large number of LEDs arranged in a matrix configuration, there is such a device in which these LEDs are arranged in arrays. In this array type LED backlight device, a plural number of sets of light emitting blocks, each of the light emitting block being composed of a large number of LEDs, arranged on the same axial line on a wiring substrate, are arrayed at the same interval from one another to constitute a light emitting unit. In the LED backlight device, much heat generated from the many LEDs is accumulated in the inside to elevate the temperature, so that marked thermal changes are induced in the component parts to produce color unevenness or otherwise affect e.g. electronic components.
In this consideration, the LED backlight device is provided with a heat dissipating means for efficiently dissipating heat generated from the LEDs.
If desired to use LEDs for each of the three prime colors (R, G, B) to generate white light for use as backlight for LCD-TV, the conventional practice has been simply to put together two green (G) LEDs, having the highest visibility with respect to luminance, one red (R) emitting LED and one blue (B) emitting LED to constitute a light source unit.
In case the load on the LED is low, such that it is possible to suppress the junction temperature to a lower value, a light source unit composed of four LEDs suffices. However, if desired to achieve high luminance light emission from the LED backlight for LCD-TV, power consumption may be increased, so that the junction temperature is raised unavoidably.
It is known in general that the light emission efficiency of the LED is changed significantly with the operating temperature depending on the color of the emitted light and the LED chip material. However, with the red (R) LED, formed of AlInGaP, the light emission efficiency is lowered to approximately one-half for the working temperature of 9Q°C compared to a value for the junction temperature of 25°C.
With the green (G) LED, which is a chip formed of InGaN, the amount of light emission is similarly decreased to 25% in case the junction temperature is changed from 25°C to 90°C. With the blue (B) LED, the amount of light emission is decreased by only approximately 5%.
If, in a backlight device in which four LEDs are put together to form a light source unit, the LEDs are to be driven to a high luminance, the junction temperature is raised. Since the red (R) LED in particular is lowered, it becomes necessary to maintain the luminance by correspondingly increasing the current applied to the red (R) LED. If the current is increased, the junction temperature is raised further to render it difficult to maintain the luminance. In addition, the operation has to be carried out under adverse light emission efficiency, thus causing wasteful power consumption.
Moreover, the red (R) LED is shorter in service life than the LEDs for other colors, even in case operation is carried out at the same junction temperature, thus possibly raising the problem related with long-term reliability.
However, if, in a light source in which four LEDs are put together as one set, the LEDs are driven to high luminance, the junction temperature may be elevated to give rise to the same problem. It may therefore be contemplated to use the same numbers of the R, G and B LEDs, or to use the set of two R LEDs, two G LEDs and one B LED.
From the perspective of power consumption or current load for G and B, it is optimal to use equal numbers of the respective colors, in light of the light emission efficiency of respective colors of the current LEDs. However, if, in case the LEDs are arranged on the backlight, the right and left ends of the backlight differ in color, the problem of color unevennesses on these ends may be presented. In such case, a light source unit is formed not by three LEDs, but by six LEDs, arranged in an order of, for example, GRBBRG. In such case, luminance unevenness tends to be produced because of the increased interval between neighboring G LEDs.
It has also been proposed to add one red (R) LED to the set of the four LEDs to constitute a light source unit composed of five LEDs with an array of GRBRG. However, with such array of GRBRG, the interval between neighboring blue (B) LEDs is larger, so that luminance unevenness tends to be produced. In addition, since the green (G) LEDs are arrayed at either ends, the green (G) LEDs are arrayed side-by-side between neighboring units.
In case the LEDs of the same color are arrayed side-by-side, the color mixing performance is aggravated in case the distance between the diffusing plate and the LEDs is reduced to reduce the thickness of the backlight device. In such case, the bright lines of the color light in question prove to be vertical streaks to cause color unevenness. That is, with the array of GRBRG, the probability is high that a green bright line is produced.
Furthermore, with the array of GRBRG, the blue (B) LED is spaced apart at all times from the green (G) LED. If the LEDs, emitting three prime colors, are arrayed as they are distributed with local non-uniformity, the color mixing performance is lowered, such that white light with high color purity may not be generated.
In view of the above problems of the related art, it is an object of the present invention to provide a light source unit for backlight, a backlight device for color liquid crystal display and a transmissive color liquid crystal display apparatus in which it is possible to improve the color mixing performance for generating white light, as well as the service life and the operational reliability, and to suppress color or luminance unevenness or wasteful power consumption.
In accordance with the present invention, there is provided a light source unit for backlight constituting a liquid crystal display backlight light source device for illuminating a transmissive color liquid crystal display panel from its backside, in which the light source unit for backlight includes three green (G) light emitting diodes, two red (R) light emitting diodes and two blue (B) light emitting diodes. The three prime color light beams (R, G, B) radiated from the seven light emitting diodes, are mixed, and the resulting light is radiated, with the seven light emitting diodes as one unit.
In accordance with the present invention, there is provided a liquid crystal display backlight light source device for illuminating a transmissive color liquid crystal display panel from its backside, in which the liquid crystal display backlight light source device includes a plural number of light source units for backlight, each of which includes three green (G) light emitting diodes, two red (R) light emitting diodes and two blue (B) light emitting diodes, as one unit. Each of the light source units for backlight mixes three prime color light beams (R, G, B), radiated from the seven light emitting diodes, to radiate the resulting light.
In accordance with the present invention, there is provided a transmissive color liquid crystal display apparatus, formed by a transmissive color liquid crystal panel and a liquid crystal display backlight light source device for illuminating the transmissive color liquid crystal display panel from its backside. The liquid crystal display backlight light source device includes a plurality of light source units each made up by three green (G) light emitting diodes, two red (R) light emitting diodes and two blue (B) light emitting diodes, as one unit. The three prime color light beams (R, G, B) radiated from these seven light emitting diodes are mixed together, and the resulting light is radiated.
In the light source unit for backlight, according to the present invention, the seven light emitting diodes are arrayed in two rows of GRBG and BGR.
According to the present invention, the light emitting diode is a side emission light emitting diode provided with an optical component for radiating light radiated from a light source from its lateral side.
The light source unit for backlight, the backlight device for color liquid crystal display apparatus and the transmissive color liquid crystal display apparatus, according to the present invention, include a light source unit for backlight in turn including two red (R) light emitting diodes, three green (G) light emitting diodes and two blue (B) light emitting diodes, with the seven light emitting diodes being a light source unit.
With these seven light emitting diodes of the light source unit for backlight, the light emitting diodes may be arrayed without the same colors lying adjacent to one another, while the sets of the three light emitting diodes, generating three prime colors, may be arrayed distributed evenly, so that it is possible to generate white light free of color or luminance unevennesses.
Moreover, with the light source unit for backlight, the number of the green (G) light emitting diodes is set so as to be larger than that of the light emitting diodes emitting the light of other colors, it is possible to improve visibility as well as to suppress power consumption.
Other objects and specified advantages of the present invention will become more apparent from the following explanation of preferred embodiments thereof which will now be made conjunction with the drawings.

### Brief Description of the Drawings

Fig.1 is an exploded perspective view showing essential parts of a color liquid crystal display apparatus according to the present invention.
Fig.2 is a schematic perspective view showing a backlight device for liquid crystal display provided on the color liquid crystal display apparatus.
Fig.3 is a plan view showing a light source unit for backlight, formed by seven light emitting diodes, provided on the color liquid crystal display apparatus.
Fig.4 shows an example of the constitution of light emitting diode units as matched to a 32-inch size color liquid crystal display panel.
Fig.5 shows an example of the constitution of light emitting diode units as matched to a 40-inch size color liquid crystal display panel.
Fig.6 shows an example of the constitution of light emitting diode units as matched to a 46-inch size color liquid crystal display panel.
Fig.7 is a plan view showing light source units for backlight each made up of nine light emitting diodes.
Fig.8 is a plan view showing light source units for backlight each made up of five light emitting diodes.
Fig.9 is a plan view showing light source units for backlight each made up of eleven light emitting diodes.
Fig.10 is a plan view showing light source units for backlight each made up of eleven light emitting diodes.
Fig.11 is a cross-sectional view taken along line X-X of Fig. 1.
Fig. 12 is a block diagram showing a driving circuit for driving a color liquid crystal display apparatus.
Fig. 13 is a plan view showing another example of a light source unit for backlight, made up of seven light emitting diodes.
Fig. 14 is a plan view showing a light emitting diode unit made up of an even number of light source units for backlight.
Figs.15A and 15B are plan views each showing sets of seven light emitting diodes, arranged in a line.
Fig. 16 is a plan view showing a first array of a plural number of light emitting diode units in a backlight enclosure.
Fig.17 is a plan view showing a second array of a plural number of light emitting diode units in a backlight enclosure.
Fig. 18 is a plan view showing a third array of a plural number of light emitting diode units in a backlight enclosure.
Fig.19 is a plan view showing a fourth array of a plural number of light emitting diode units in a backlight enclosure.
Fig.20 is a plan view showing a fifth array of a plural number of light emitting diode units in a backlight enclosure.

### Best Mode for Carrying out the Invention

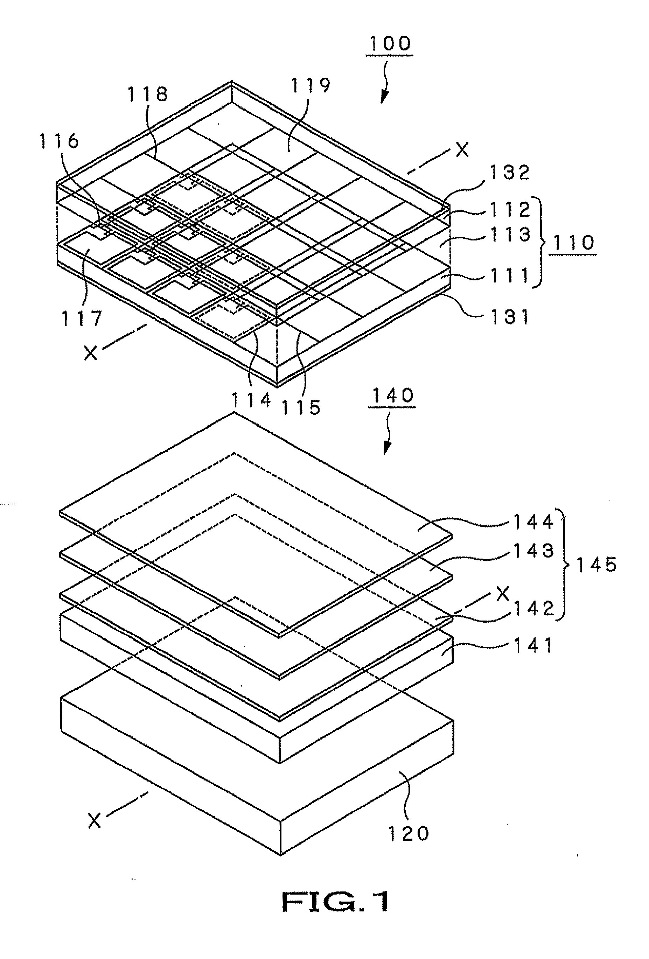

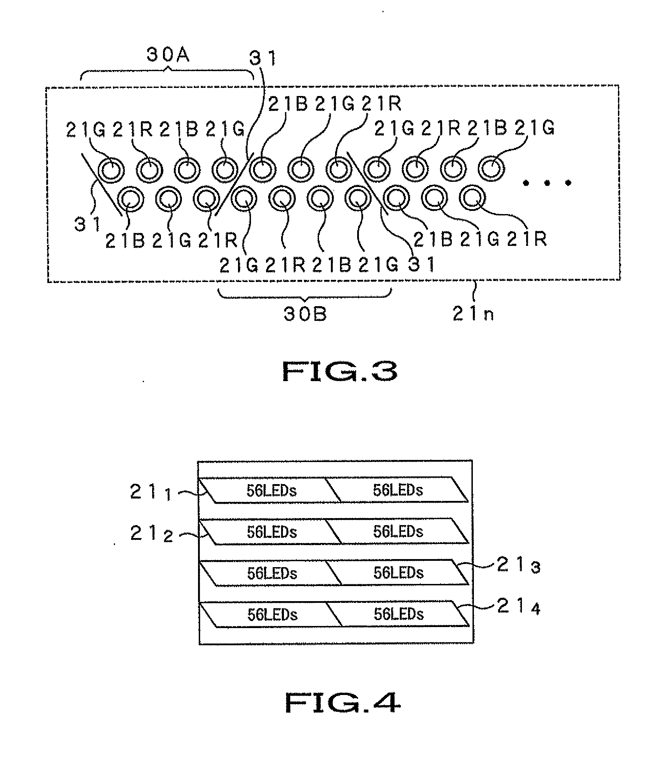

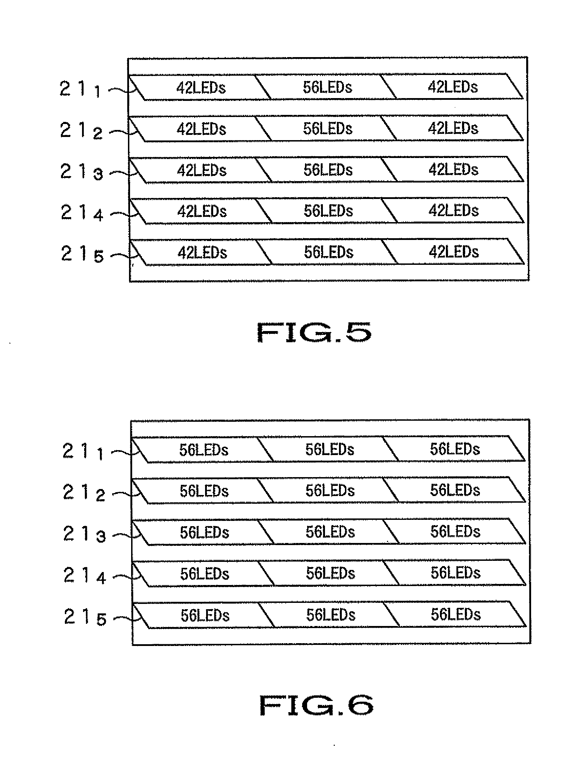

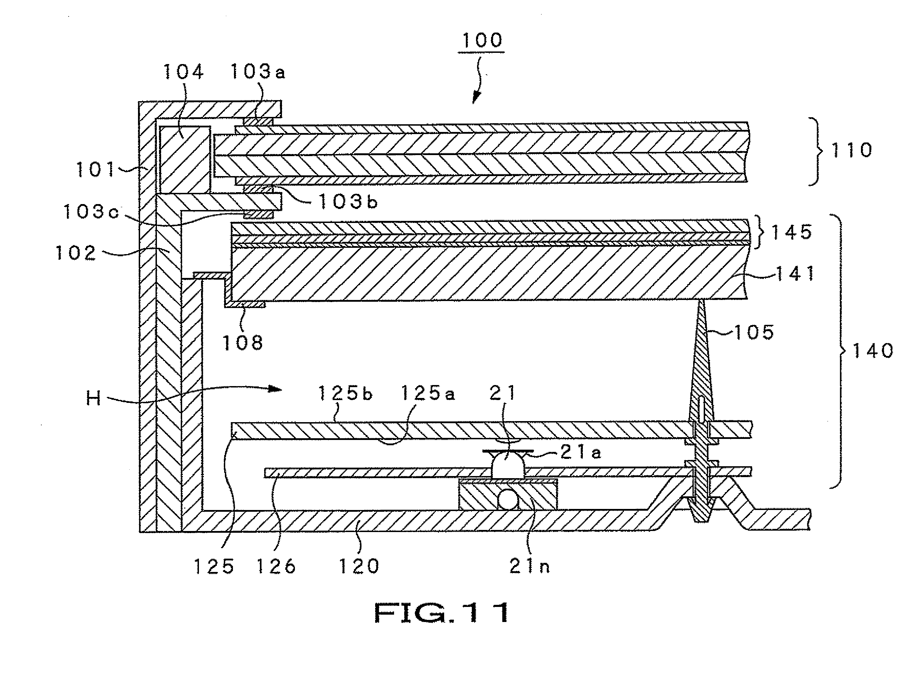

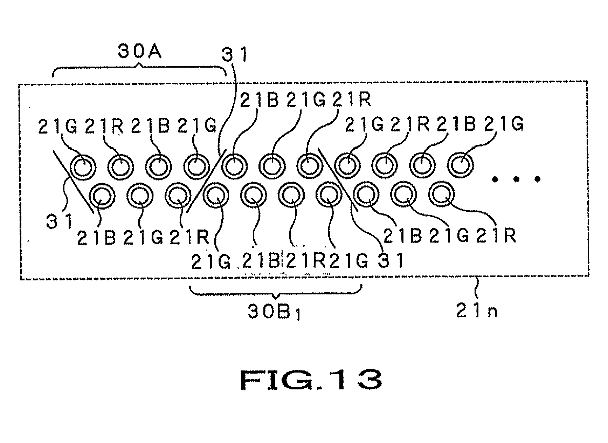

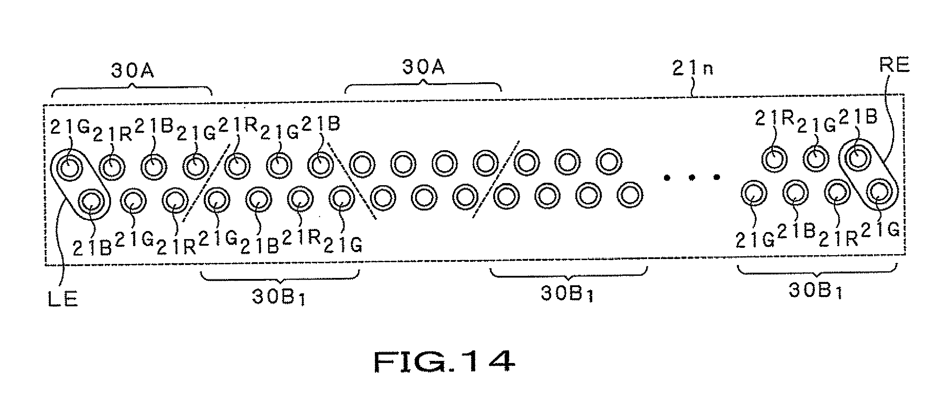

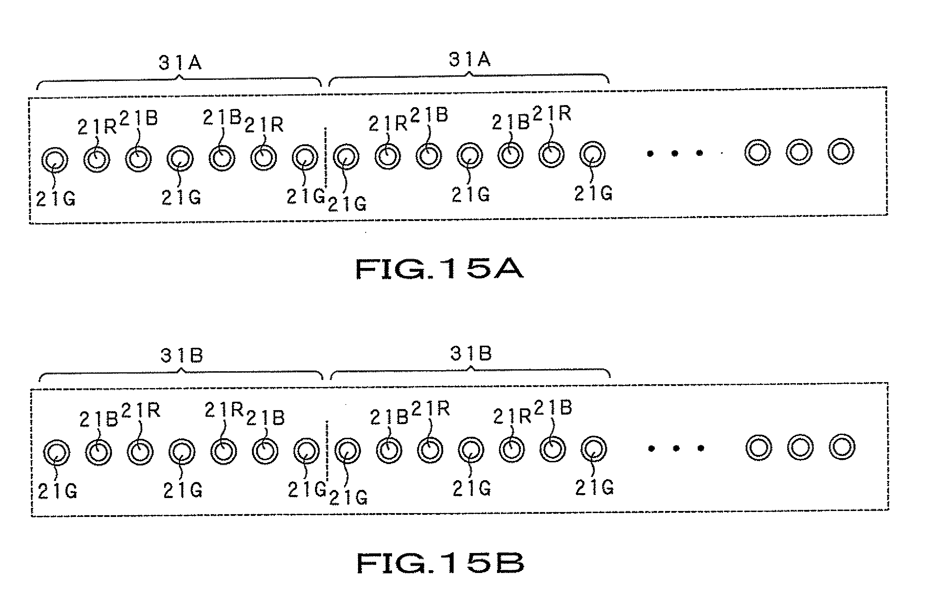

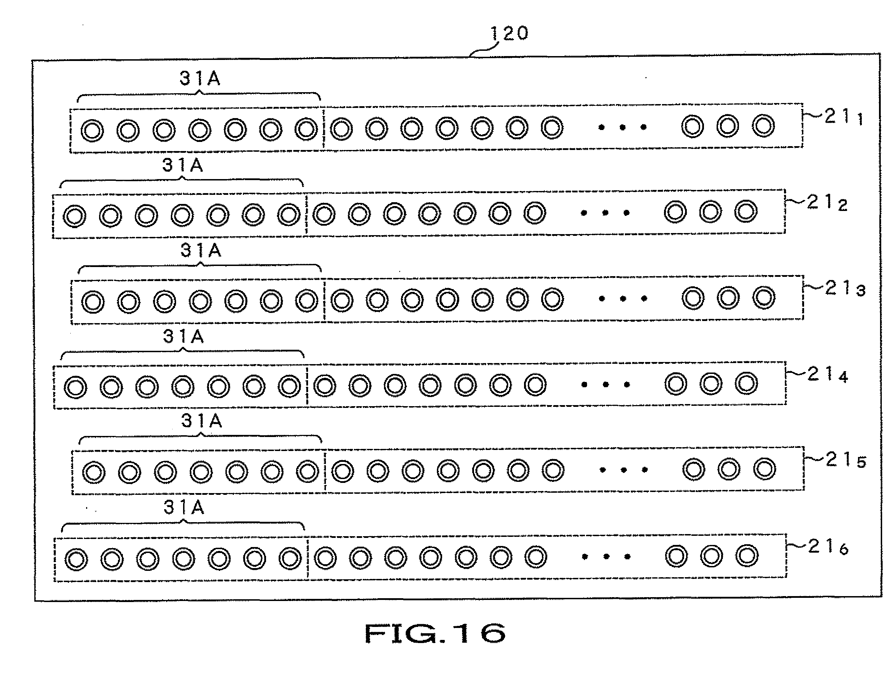

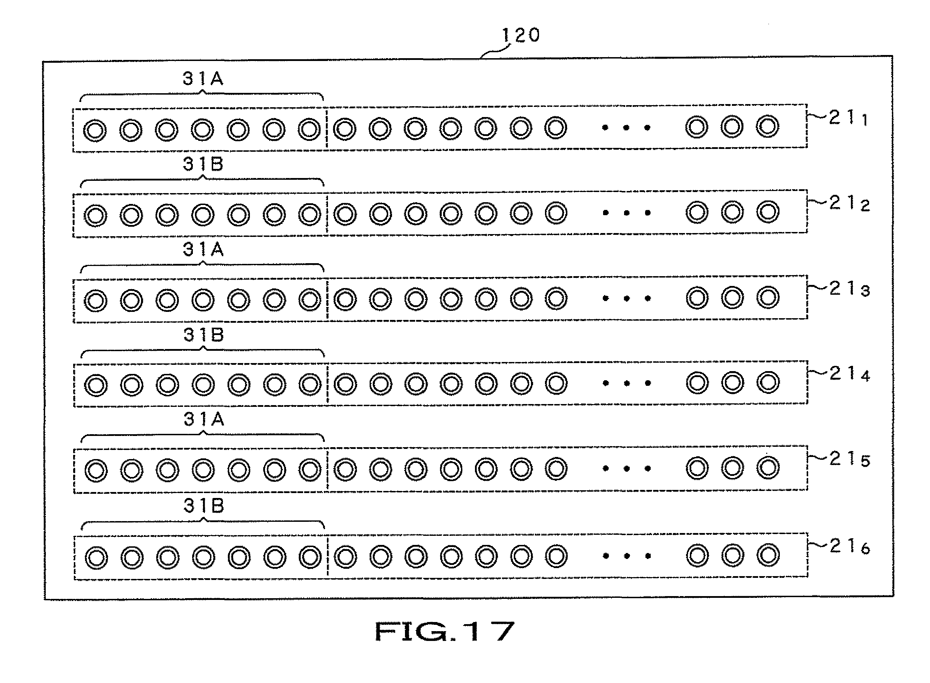

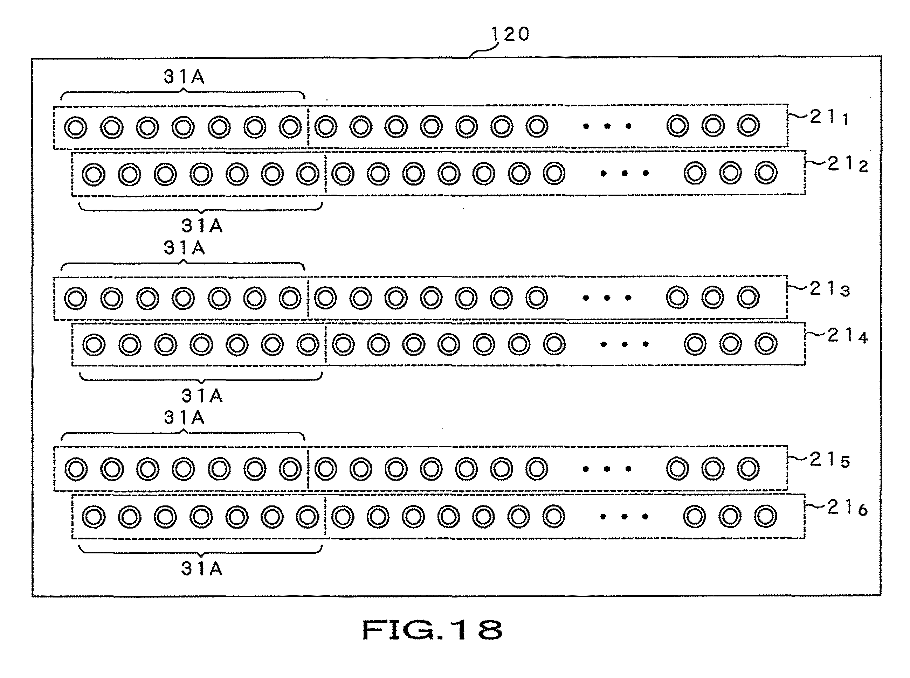

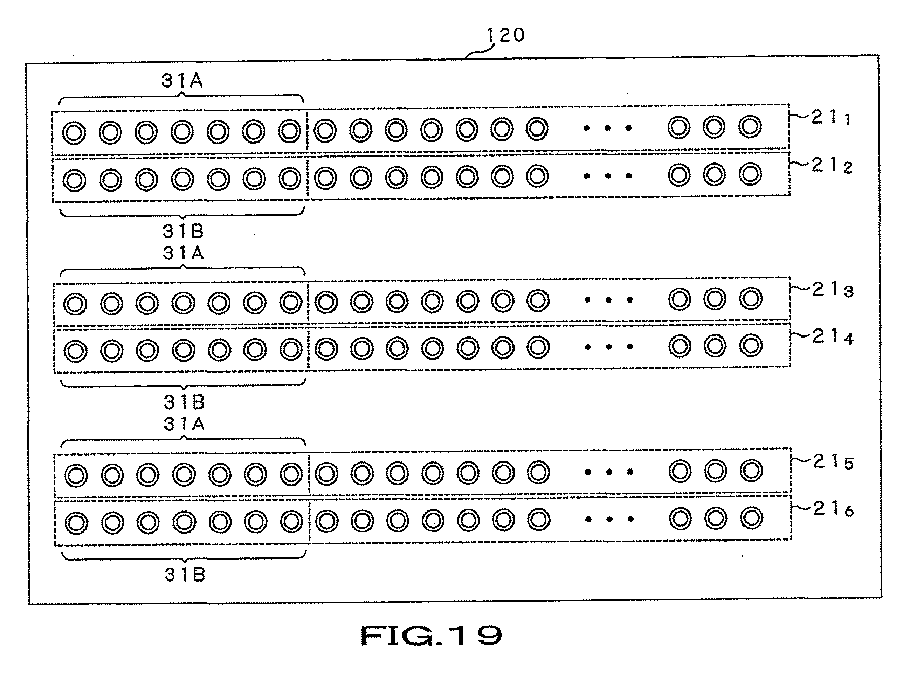

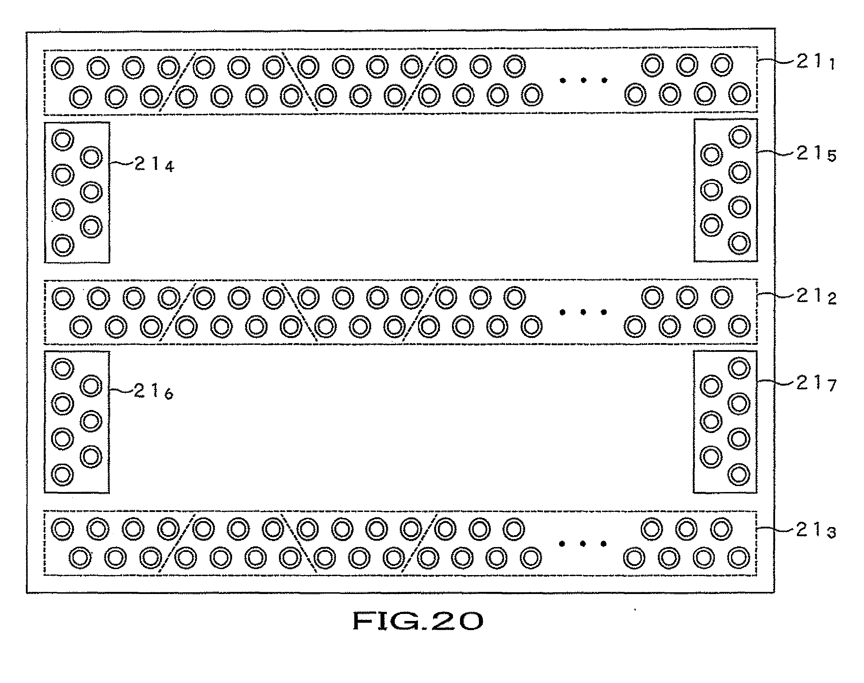

The present invention will now be described in detail with reference to the drawings. It should be noted that the present invention is not limited to the embodiments now described and may be changed as desired without departing from the scope of the invention.
The present invention is applied to a transmissive color liquid crystal display apparatus 100, constructed as shown for example in Fig.1.
This transmissive color liquid crystal display apparatus 100 is made up of a transmissive color liquid crystal display panel 110, and a backlight device for color liquid crystal display 140, provided on the backside of this color liquid crystal display panel 110. This transmissive color liquid crystal display apparatus 100 may be provided with a receiving unit, such as an analog tuner or a digital tuner, for receiving ground wave or satellite wave, a picture signal processing unit or an audio signal processing unit for processing picture signals or audio signals, respectively, and an audio signal outputting unit, such as loudspeaker, for outputting audio signals processed by the audio signal processing unit, although these units are not shown.
The transmissive color liquid crystal display panel 110 is made up of two transparent substrates, formed by glass or the like (a TFT substrate 111 and a counter-electrode substrate 112), and a liquid crystal layer 113 of, for example twisted nematic (TN) liquid crystal, sealed in a space between the two substrates. On the TFT substrate 111, there are formed signal lines 114 and scanning lines 115, arranged in a matrix configuration, as well as thin-film transistors 116, as switching elements, and pixel electrodes 117, arranged at the points of intersection of the signal lines 114 and the scanning lines 115. The thin-film transistors 116 are sequentially selected by the scanning lines 115 to write picture signals, supplied from the signal lines 114, in associated ones of the pixel electrodes 117. On the inner surface of the counter-electrode substrate 112, there are formed counter electrodes 118 and color filters 119.
With the transmissive color liquid crystal display apparatus 100, the above-described transmissive color liquid crystal display panel 110 is sandwiched between a pair of polarizing plates 131, 132, and driven in accordance with an active matrix system, as white light is illuminated from the backside by the backlight device for color liquid crystal display 140, such as to display a desired full-color picture.
The backlight device for color liquid crystal display 140 illuminates the color liquid crystal display panel 110 from its backside. Referring to Fig.1, the backlight device for color liquid crystal display 140 includes a backlight enclosure 120, within which there are arranged light sources, herein not shown, and within which there are incorporated the functions of mixing the light, radiated from the light source, into the white light. There are provided, within the backlight enclosure 120, a light diffusing plate 141, and a set of optical sheets 145, stacked on the light diffusing plate 141, such as a light diffusing sheet 142, a prism sheet 143 and a polarized light transforming sheet 144. The light diffusing plate 141 causes the light, radiated from the light source, to be internally diffused, to provide for uniform luminance in surface light radiation. The set of optical sheets 145 uplifts the white light, radiated from the light diffusing plate 141, along the direction of a line normal to the light diffusing plate 141, to raise the luminance in the surface light radiation.

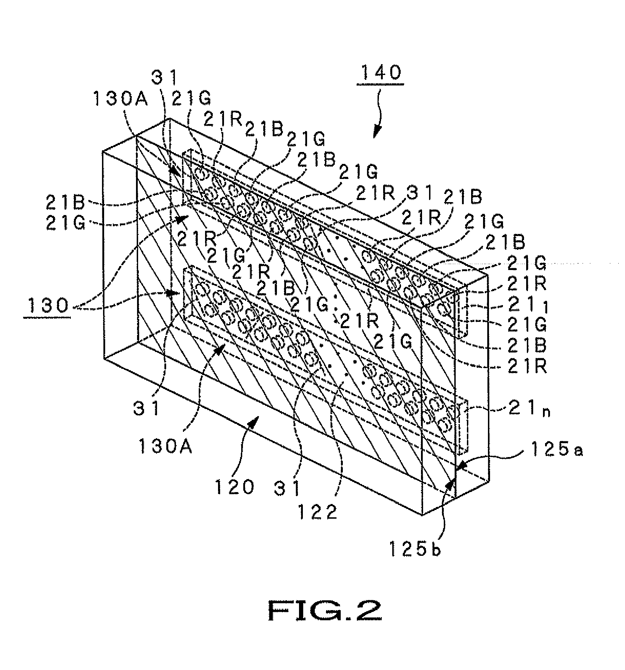

Fig.2 shows the schematic configuration of the inside of the backlight enclosure 120. Referring to Fig.2, the backlight enclosure 120 uses, as light sources, a red (R) light emitting diode 21R, radiating red (R) light, a green (G) light emitting diode 21G, radiating green (G) light, and a blue (B) light emitting diode 21B, radiating blue (B) light. In the following description, in case the red light emitting diode 2 1 R, green light emitting diode 2 1 G and the blue light emitting diode 2 1 B are referred to generically, each light emitting diode is simply referred to as light emitting diode 21.
Referring to Fig.2, the light emitting diodes 21 are arrayed in a row in a preset sequence to form a light emitting diode unit 21 n, on a substrate 122, where n is a natural number. The respective light emitting diodes 21, arrayed on the substrate 122, are grouped so that seven light emitting diodes form an enclosed light emitting diode set of trapezoidal shape. A plural number of such light emitting diode sets are arrayed on a reflecting plate 31 to form a plural number of light source units for backlight 30A, 30B, as shown in Fig.3. The light source units for backlight 30A, 30B are each formed by two red (R) light emitting diodes 2IR, three green (G) light emitting diodes 21G and two blue (B) light emitting diodes 21B.
Referring to Fig.3, the light source unit for backlight 30A includes four light emitting diodes 21. and three light emitting diodes 21. in its upper row and lower row, respectively. In the upper row of the light source unit for backlight 30A, the light emitting diodes are arrayed in the order of the green (G) light emitting diode 21G, red (R) light emitting diode 21R, blue (B) light emitting diode 21B and the green (G) light emitting diode 21G, that is, in the order of GRBG, looking from the left side. In the lower row of the light source unit for backlight 30, the light emitting diodes are arrayed in the order of the blue (B) light emitting diode 21B, green (G) light emitting diode 21G and the red (R) light emitting diode 21R, that is, in the order of BGR.
Referring to Fig.3, the light source unit for backlight 30B includes three light emitting diodes 21 and four light emitting diodes 21 in its upper row and lower row, respectively. In the upper row of the light source unit for backlight 30B, the light emitting diodes are arrayed in the order of the blue (B) light emitting diode 21B, green (G) light emitting diode 21G and the red (R) light emitting diode 21B, that is, in the order of BGR. In the lower row of the light source unit for backlight 30, the light emitting diodes are arrayed in the order of the green (G) light emitting diode 21G, red (R) light emitting diode 21R, blue (B) light emitting diode 21B and the green (G) light emitting diode 21G, that is, in the order of GRBG.
The light emitting diodes 21 are arrayed on the substrate 122 in a desired sequence, more specifically, in two rows of the light emitting diodes, the arraying periods thereof are offset by one-half pitch, as described above. It may be said that a plural number of the light source units for backlight 30A and a plural number of the light source units for backlight 30B are arranged alternately on the substrate 22.
In the light source units for backlight 30A, 30B, three color light beams of R, G and B, emitted from the respective seven light emitting diodes 21, are locally mixed together to generate white light. The reflecting plate 31, encircling the seven light emitting diodes 21 to constitute the light source unit for backlight 30A or 30B, is formed by, for example, semi-transparent optical multiple layers so as to render the frame shape unobtrusive.
A plural number of rows of the light emitting diode units 21n are arranged in the backlight enclosure 120, depending on the size of the color liquid crystal display panel 110 illuminated by the backlight device for color liquid crystal display 140. The light emitting diode units 21n may be arrayed in the backlight enclosure 120 so that the longitudinal direction of the light emitting diode units 21n will be the horizontal direction, as shown in Fig.2. Alternatively, the light emitting diode units 21n may be arrayed so that the longitudinal direction of the light emitting diode units 21n will be the vertical direction, in a manner not shown, or so that the longitudinal direction of the light emitting diode units 21n will be partly the horizontal direction and partly the vertical direction.
The technique of arraying the light emitting diode units 21n so that the longitudinal direction thereof will be the horizontal direction or the vertical direction is equivalent to that of arraying the fluorescent tubes, so far used preferentially as light sources of the backlight device. Thus, the accumulated designing know-how may be used to reduce the cost or manufacture time.
The light emitting diode units 21n, constituted by the light source unit for backlight 30A and the light source unit for backlight 30B, are arrayed on a 32-inch, 40-inch or 46-inch size color liquid crystal display panel 110 in a manner shown for example in Figs.4, 5 and 6.
The light beams, radiated from the red (R) light emitting diode 21R, green (G) light emitting diode 21G and the blue (B) light emitting diode 21B, are mixed together in the backlight enclosure 120 to form white light. It should be noted that a lens, a prism or a reflective mirror, for example, is provided for each light emitting diode 21 so that the red (R) light, green light (G) and blue (B) light, radiated from each light emitting diode 21, will be evenly mixed together in the backlight enclosure 120 to form radiated light of wide directivity.
Each light emitting diode 21 includes a light emitting bulb, held by a resin holder, and a pair of terminals protruded from the resin holder, in a manner not shown. Referring to Fig.11, the light emitting diode 21 is a side radiating light emitting diode, provided with light directivity such that a major portion of radiated light will be radiated from a lateral side, or a so-called side emission LED.
The side radiating light emitting diode has been disclosed in, for example, the JP Laid-Open Patent Publications 2003-8068 or 2004-133391.
In case the two red (R) light emitting diodes 21R, three green (G) light emitting diodes 21G and two blue (B) light emitting diodes 21B, encircled by the reflecting plate 31, are arrayed on the substrate 122 so that the light emitting diodes of the same color will not be adjacent to each other, and so that the sets of the three light emitting diodes, emitting the three prime colors, will be arranged distributed uniformly, it is possible to improve color mixing performance in generating white light. Thus, even if the backlight device for color liquid crystal display 140 is reduced in thickness, it is possible to generate optimum white light free of color unevenness or luminance unevenness.
Moreover, since the number of the green (G) light emitting diodes 2 1 G is set so as to be larger than that of the light emitting diodes 21 of the other colors, and the light emitting diodes are arrayed on the substrate 122 in a desired sequence, in two rows, the arraying periods of which are shifted relative to each other by one-half pitch, it is possible to elevate visibility and to suppress power consumption.

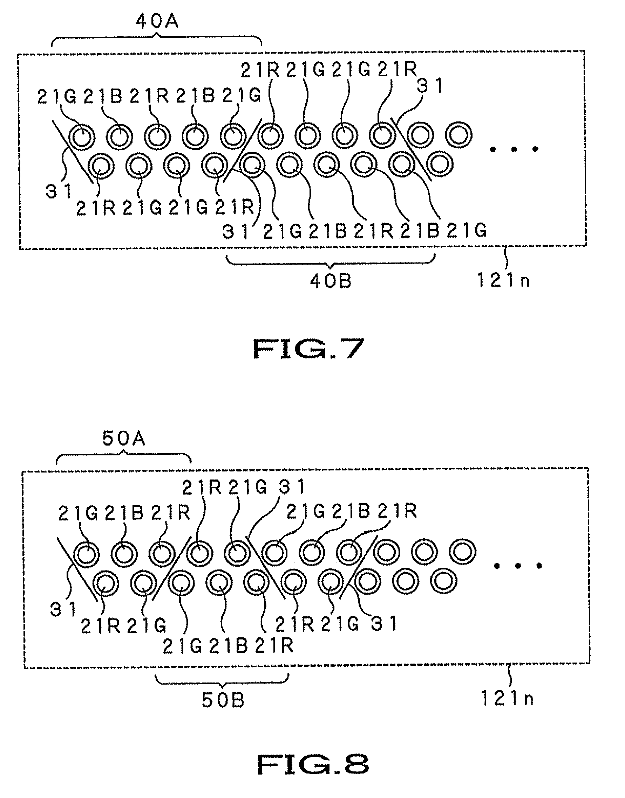

In Figs.7 to 9, several embodiments are shown for a case where a plural number of light emitting diodes 21 are arrayed on the substrate 122 in two rows, the arraying periods of which are shifted relative to each other by one-half pitch, in a desired sequence, to form the light emitting diode units 21n, where n is a natural number. It is noted that a plural number of the light emitting diodes 21 on the substrate 122 are encircled in a trapezoidal shape by the reflecting plates 31 to form two sorts of the light source units for backlight.
Fig.7 shows a light emitting diode unit 121n in which the light emitting diodes 21 are arrayed so that light source units for backlight 40A, 40B provided with three red (R) light emitting diode 21R, four green (G) light emitting diode 21G and two blue (B) light emitting diode 21B, are arranged alternately. In this case, the distance between the blue (B) light emitting diode 21B on the same row becomes largest, while certain ones of the green (G) light emitting diode 2 1 G are adjacent to one another on the same row, thus deteriorating the color mixing performance in generating white light.
Fig.8 shows a light emitting diode unit 121n in which the light emitting diodes 21 are arrayed so that light source units for backlight 50A, 50B, each including two red (R) light emitting diodes 21R, two green (G) light emitting diodes 21G and one blue (B) light emitting diode 21B, are arrayed in an alternate fashion. In this case, certain ones of the green (G) light emitting diodes 21G and certain ones of the red (R) light emitting diodes 21R are frequently adjacent to one another on the same row, thus deteriorating the color mixing performance in generating white light.

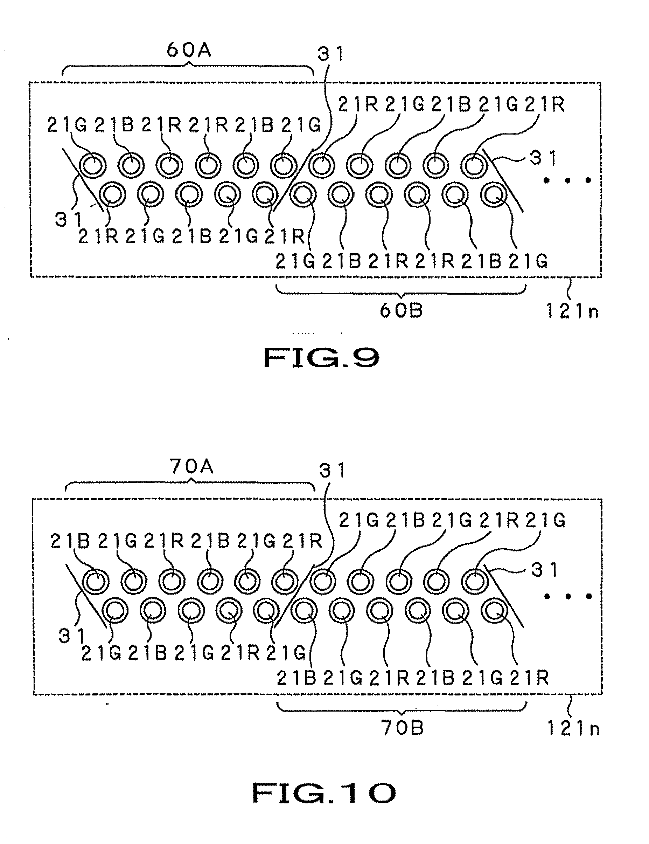

Fig.9 shows a light emitting diode unit 121n in which the light emitting diodes 21 are arrayed so that light source units for backlight 60A, 60B, each including four red (R) light emitting diodes 21R, four green (G) light emitting diodes 21G and three blue (B) light emitting diodes 21B, are arrayed in an alternate fashion. In this case, the color mixing performance is fairly satisfactory, even granting that certain ones of the red (R) light emitting diodes 21R are adjacent to one another on the same row. However, this light emitting diode unit suffers from the problem that, since the number of the green (G) light emitting diodes 2 1 G is small, it is necessary to raise the power consumption in order to improve the visibility.
Fig.10 shows a light emitting diode unit 121n in which the light emitting diodes 21 are arrayed so that light source units for backlight 70A, 70B, each including three red (R) light emitting diodes 21R, five green (G) light emitting diodes 21G and three blue (B) light emitting diodes 21B, are arrayed in an alternate fashion. In this case, power consumption may be reduced because of the larger number of the green (G) light emitting diodes 21 G. Moreover, the color mixing performance is high because there are no adjacent light emitting diodes 21radiating the same color light.
Thus, there are many techniques of arraying the light emitting diodes 21 to constitute the light source unit for backlight as the constitution of the light emitting diodes 21 with different emitted colors is varied. Of these, the array of the light emitting diodes 21 which will form the light source units for backlight 30A, 30B, shown in Fig.3, is optimum from the perspective of the power consumption, current value balance, color mixing performance for generating white light or suppression of luminance or color unevenness.
Referring to Fig.2, a light diffusing/ light conducting plate (diverter plate) 125 for mixing the red (R) light, green (G) light and blue (B) light, radiated from the light emitting diodes 21, is provided in the backlight enclosure 120 for overlying the light emitting diode unit 21n as the light source.
The diverter plate 125, including the light emitting diodes 21, generating three prime colors (R, G and B), as a light source, has a color mixing function, and diffuses the light, radiated from the light emitting diodes 21, and the light reflected from a reflective sheet, which will be explained subsequently.
The light diffusing plate 141, shown in Fig. 1, diffuses the light, color-mixed by the diverter plate 125, and radiates the so diffused light to the set of optical sheets 145 as white light of uniform luminance. The set of optical sheets 145 uplifts this white light along the direction of a line normal to the light diffusing plate 141 to elevate the luminance.

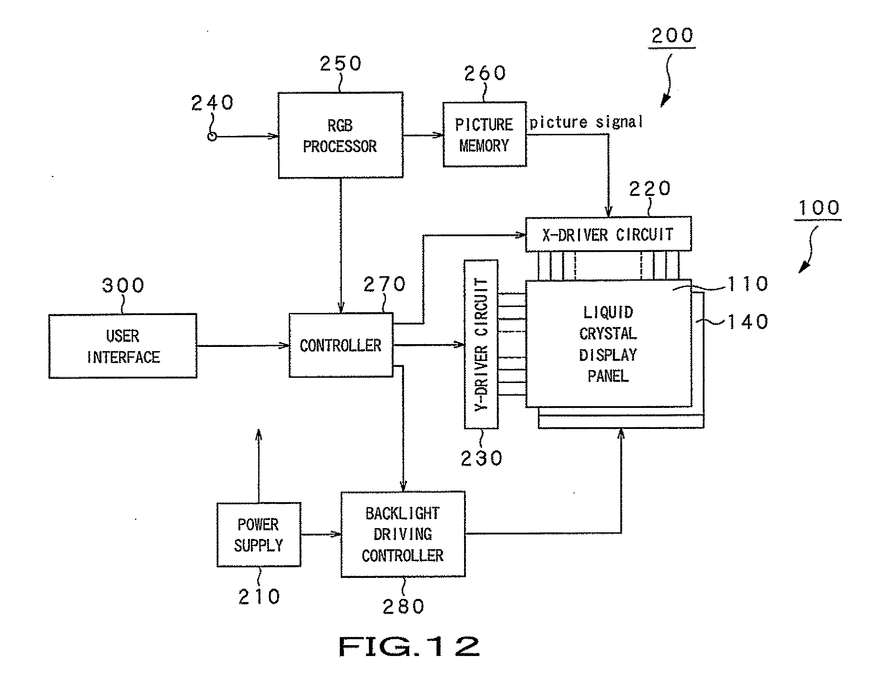

Fig.11 depicts a cross-sectional view taken along line X-X of Fig. 1, with the liquid crystal display 100, shown in Fig. 1, being shown in Fig.12 in an assembled state. Referring to Fig.11, the color liquid crystal display panel 110, constituting the liquid crystal display 100, is retained, via spacers 103a, 103b, by an outer frame 101, operating as an outer casing for the liquid crystal display 100, and an inner frame 102. A guide member 104 is provided between the outer frame 101 and the inner frame 102 for suppressing displacement along the longitudinal direction of the color liquid crystal display panel 110 sandwiched between the outer frame 101 and the inner frame 102.
The backlight device for color liquid crystal display 140, as a component part of the color liquid crystal display apparatus 100, includes the light diffusing plate 141 and the diverter plate 125. On the light diffusing plate 141 is layered the set of optical sheets 145 as described above. Between the diverter plate 125 and the backlight enclosure 120, there is provided a reflective sheet 126. This reflective sheet 126 is provided so that the reflective surface thereof faces a light incident surface 125a of the diverter plate 125 and so that the reflective sheet is closer to the backlight enclosure 120 than the light radiating direction of the light emitting diode 21.
The reflective sheet 126 is e.g. a silver sensitized reflective film provided by layering a silver reflective film, a low refractive index film and a high refractive index film on a base sheet. The reflective sheet 126 mainly reflects light incident thereon after radiation from the light emitting diode 121 and reflection by the diverter plate 125.
The light diffusing plate 141, diverter plate 125 and the reflective sheet 126, provided in the backlight device for color liquid crystal display 140, are mounted for facing one another, as shown in Fig.11. These components are retained in the backlight enclosure 120 of the backlight device for color liquid crystal display 140 as the relative spacing between neighboring ones of the components is maintained by a plural number of optical studs 105 provided in the backlight enclosure 120. It is noted that the light diffusing plate 141 is also retained by a bracket member 108 provided in the backlight enclosure 120.
The color liquid crystal display apparatus 100, constructed as described above, is driven by a driving circuit 200 shown for example in Fig.12. The driving circuit 200 includes a power supply unit 210 for supplying driving supply power for e.g. the color liquid crystal display panel 110 and the backlight device for color liquid crystal display 140, and an X-driver circuit 220 as well as a Y-driver circuit 230 for driving the color liquid crystal display panel 110. The driving circuit 200 also includes an RGB processor 250, supplied via an input terminal 240 with picture signals from outside and with picture signals received by a receiver, not shown, of the color liquid crystal display apparatus 100 and processed by a picture signal processor. The driving circuit 200 also includes a picture memory 260 and a controller 270, both connected to the RGB processor 250, and a backlight driving controller 280 for driving controlling the backlight device for color liquid crystal display 140.
In this driving circuit 200, the picture signals, transmitted as input via input terminal 240, are subjected to e.g. chroma processing, by the RGB processor 250, and converted from the composite signals into RGB separate signals, for convenience in driving the color liquid crystal display panel 110. The resulting signals are transmitted to the controller 270, while being transmitted via picture memory 260 to the X-driver circuit 220.
The controller 270 controls the X-driver circuit 220 and the Y-driver circuit 230, at a preset timing, as matched to the RGB separate signals, in order to drive the color liquid crystal display panel 110 by RGB separate signals, supplied via picture memory 260 to the X-driver circuit 220, so as to display a picture corresponding to the RGB separate signals.
The backlight driving controller 280 generates pulse-width modulated signal (PWM signal) from the voltage supplied from the power supply unit 210 to drive respective light emitting diodes 21 operating as light sources for the backlight device for color liquid crystal display 140. In general, the color temperature of a light emitting diode depends on the operating current. Thus, if desired to faithfully reproduce the color (to render the color temperature constant) as desired luminance is procured, it is necessary to drive the light emitting diode 21, using the PWM signal, to suppress variations in color.
A user interface 300 is an interface for selecting a channel received by the aforementioned receiving unit, not shown, adjusting the volume of audio output from an audio output unit, not shown, and for adjusting the white balance or the luminance of white light from the backlight device for color liquid crystal display 140 adapted for illuminating the color liquid crystal display panel 110.
For example, if the user has adjusted the luminance from the user interface 300, a luminance control signal is transmitted to the backlight driving controller 280 via controller 270 of the driving circuit 200. The backlight driving controller 280 is responsive to this luminance control signal to vary the duty ratio of the PWM signal for each of the red (R) light emitting diode 21R, green (G) light emitting diode 21 G and the blue (B) light emitting diode 2 1 B to effect driving control of the red (R) light emitting diode 21R, green (G) light emitting diode 21G and the blue (B) light emitting diode 21B.
If the light emitting diodes 21 are arrayed as shown in Fig.3 to form the light source unit for backlight 30A and the light source unit for backlight 30B, it may be an occurrence that the light emitting diode 21R- light emitting diode 21R, green (G) light emitting diode 21G- green (G) light emitting diode 2 1 G or the blue (B) light emitting diode 21B- blue (B) light emitting diode 21B are arrayed on the same row with the interposition of four at the maximum of the light emitting diodes 21.
In this consideration, the red (R) light emitting diode 21R and the blue (B) light emitting diode 21B, arranged on the same row in the light source unit for backlight 30B, are interchanged, as shown in Fig.13, to form a light source unit for backlight 30B₁, as shown in Fig.13. If the light source unit for backlight 30B₁ is substituted in this manner for the light source unit for backlight 30B, the light emitting diode 21R- light emitting diode 21R or the blue (B) light emitting diode 21B- blue (B) light emitting diode 21B on the same row are arrayed with the interposition of three at the maximum of the light emitting diodes 21.
Thus, if the light source unit for backlight 30A and the light source unit for backlight 30B₁ are arrayed alternately to form the light emitting diode unit 21n, as shown in Fig.13, the three light emitting diodes 21, radiating three prime colors, may be arrayed distributed more uniformly, so that, even if the backlight device for color liquid crystal display 140 is further reduced in thickness, it is possible to generate optimum white light which is free from color or luminance unevenness.
It should be noted that the arraying pattern for the light emitting diodes 21 in case of constituting the backlight device for color liquid crystal display apparatus from seven light emitting diodes 21 is not limited to that shown by the light source units for backlight 30A, 30B or 30B₁ and practically any arrangement may be used provided that the arrangement used allows for more uniform array of the three light emitting diodes 21 radiating three prime colors.
In the light source units for backlight 30A, 30B, or the light source unit for backlight 30B_{1,} described above with reference to Figs.3 and 13, a reflection plate 31 is provided every seven light emitting diodes 21. Even in case the reflection plate 31 is omitted, the color mixing performance for generating white light may be improved because two red (R) light emitting diodes 21R, three green (G) light emitting diodes 21G and two blue (B) light emitting diodes 21B, are arrayed on the substrate 122 so that no light emitting diodes of the same color will be adjacent to each other and so that distribution of the three light emitting diodes, radiating the three prime colors, in the array of the light emitting diodes, will be uniform. Thus, even in cases wherein the backlight device for color liquid crystal display 140 is further reduced in thickness, it is possible to generate optimum white light which is free from color or luminance unevenness.
In cases where there is provided the reflecting plate 31, the light source units for backlight 30A, 30B or 30B may be unequivocally separated based on the light emitting diode sets each made up of seven light emitting diodes 21. However, there is raised a problem, felt at the time of mass fabrication, such as increased costs, onerous mounting operations or the necessity of carrying out vibration tests, brought about as a result of providing the reflecting plate 31.
With the light source units for backlight 30A, 30B or 30B₁, shown in Figs.3 and 13, in which the light emitting diodes 21, emitting the three prime colors, are arranged optimally, it is possible to generate white light with high color mixing performance, without the necessity of providing the reflecting plate 31.
Meanwhile, the left and right ends along the longitudinal direction of the light emitting diode unit 21n are positioned in the vicinity of the inner wall surface of the backlight enclosure 120. These inner wall surfaces of the backlight enclosure 120 are subjected to reflection processing beforehand in order to elevate the utilization efficiency of the light radiated from the light emitting diodes 21.
Thus, there are cases in which, in the vicinity of the inner wall surface of the backlight enclosure 120, the adverse effect of the colored light radiated from the light emitting diodes 21, arranged in the vicinity of the inner wall surface, is felt most strongly. For example, if the light emitting diodes 21, arranged at the left and right ends of the light emitting diode unit 21n, are those radiating light of respective different colors, there are produced color unevennesses between the color at the left ends and that at the right end.
Thus, in case of the light emitting diode unit 21n, made up of alternately arranged light source units for backlight 30A, 30B₁, as shown in Fig. 14, an even number of the sets of the light source units for backlight 30A, 30B₁ is arranged so that the light emitting diode 21, arranged at the left end LE, and the light emitting diode 21, arranged at the right end RE, will be the light emitting diodes radiating the same color light.
In case an even number of the sets of the light source unit for backlight 30A and an even number of the sets of the light source unit for backlight 30B₁ are arranged in the light emitting diode unit 21n, as shown in Fig.14, the green (G) light emitting diode 21G and the blue (B) light emitting diode 2 1 B of the light source unit for backlight 30A are arrayed at the left end LE, while the blue (B) light emitting diode 21B and the green (G) light emitting diode 21G of the light source unit for backlight 30B₁ are arrayed at the right end RE. By so doing, it is possible to eliminate color unevenness in the vicinity of the inner wall surface of the backlight enclosure 120.
The light emitting diode unit 21n is formed by combinations of the light source units for backlight 30A, 30B or 30B₁, each made up of two rows of seven light emitting diodes 21, as shown in Figs.3, 13 and 14. It is however possible to form the light emitting diode unit 21n using a plural number of light source units for backlight 31A or 31B, each being made up of seven light emitting diodes 21, arranged in a line, as shown in Figs.15A and 15B.
With the light source unit for backlight 31 A, shown in Fig.15A, three green (G) light emitting diodes 21G are arrayed one at the center, one at the left end and one at the right end. Two red (R) light emitting diodes 21R and two blue (B) light emitting diodes 21B are arrayed to fill in the interstices between the both end light emitting diodes and the mid light emitting diode, so that the red light emitting diodes and blue light emitting diodes will be arrayed symmetrically about the mid green light emitting diode as center. With the light source unit for backlight 31B, shown in Fig.15B, the arraying order of the red (R) light emitting diodes 21R and the blue (B) light emitting diodes 21B in the light source unit for backlight 31A shown in Fig.15A is reversed.
With the light source units for backlight 31A, 31B, in which the seven light emitting diodes 21 are arrayed in a line, the light emitting diodes 21, radiating the different color light beams, may be arrayed distributed substantially uniformly, without locally congested arrangement of the light emitting diodes of the same colors, in contrast to the conventional technique in which each light source unit for backlight is formed by an array of five or six light emitting diodes.
Thus, by arraying the light emitting diodes 21 on the substrate 122 for forming plural numbers of the light source units for backlight 31A or 31B, it is possible to improve the color mixing performance for generating white light. Thus, even in cases wherein the backlight device for color liquid crystal display 140 is reduced in thickness, it is possible to generate optimum white light which is free from color or luminance unevenness.
The manner in which the light emitting diode unit 21n, made up of the light source units for backlight 31A or 31B, is arranged in the backlight enclosure 120, will now be described with reference to Figs.16 to 19.
It is assumed that six of the light emitting diode units 21n, made up of plural numbers of the light source units for backlight 31A or 31B, are arranged within the backlight enclosure 120.
If solely the light emitting diode units 21n, each made up of plural light source units for backlight 31A, are used, the light emitting diode units are arrayed so that the light emitting diodes 21 of neighboring ones of the light emitting diode units are offset by one-half pitch, as shown in Fig.16. The reason is that all of the light emitting diode units 21n are made up by the light source units for backlight 31A, so that, if the light emitting diodes 21 of the neighboring light emitting diode units are arrayed without pitch offset, the light emitting diodes 21, radiating the light of the same color, are arrayed side-by-side in a column of the neighboring light emitting diode units, thus producing color compaction and consequent color unevenness. Hence, the light emitting diode units 21n are arrayed with pitch offset, without the light emitting diodes 21 of the same color being arrayed side-by-side in a column of the neighboring light emitting diode units, as shown in Fig.16.
In case solely the light emitting diode units 21n, made up only of the light source units for backlight 31B, as shown in Fig.15B, are used as a light source, it is preferred to array the light emitting diodes of the neighboring light emitting diode units 21n so that the light emitting diodes 21 of a column will be arrayed with pitch offset, for the same grounds.
In case the light emitting diode units 21n are arrayed not with an offset of one-half pitch, but without pitch offset of the columns of the light emitting diode 21, as shown in Fig.17, the light emitting diode units 21n, made up of the plural light source units for backlight 31A and the light emitting diode units 21 n, made up of the plural light source units for backlight 31B, are arrayed alternately so as to avoid the plural numbers of the light emitting diodes 21 of the same colors being locally congested in a column of the light emitting diodes 21 to the maximum possible extent.
In arraying the light emitting diode unit 21n in the backlight enclosure 120, a plural number of sets of the light emitting diode units 21n, each set being made up of two light emitting diode unit 21n, may be arranged, as shown in Figs.18 and 19, instead of arraying six of the light emitting diode unit 21n, with the same spacing from one another along the vertical direction, as shown in Figs.16 and 17.
The number of the light source units for backlight 30A, 30B, 30B₁, 30A and 30B constituting each light emitting diode unit 21n, shown in Figs.3, 13, 14, 15A and 15B, may, for example be 4 to 8, so that the number of the light emitting diodes 21 in each light emitting diode unit will be on the order of 28 (7×4) to 56 (7×8).
In general, the chromaticity of the color light, radiated from a light emitting diode, undergoes marked variations, even for the same color light. Hence, the light emitting diodes, suffering from variations in chromaticity, need to be used willfully, even for the light emitting diodes 21 of the same color used for the sole light emitting diode unit 21n. The reason is that, if these light emitting diodes, suffering from variations in chromaticity, are not used willfully, the number of the light emitting diodes 21, produced without being actually used, would be increased, thus raising the costs.
It is therefore necessary to willfully select and adjust the light emitting diodes 21, radiating the respective different color light beams, suffering from variations in chromaticity, so that white light of the targeted chromaticity will be obtained in a given one of the light emitting diode unit 21n. The number of from four to eight of the light source units for backlight 30A, 30B, 30B₁, 31A or 31B in each light emitting diode unit 21n is an empirical value as found from the standpoint of ease in such adjustment. That is, if the number of the light emitting diodes 21 in a sole light emitting diode unit 21n is too large or too small, it becomes difficult to reach the balanced state for acquiring the desired chromaticity of white light.
Referring to Fig.20, the number of the light source units for backlight is prescribed to four to eight as described above in case the light emitting diode unit 21n is arrayed so that its longitudinal direction is the transverse direction of the backlight enclosure 120, as with the light emitting diode units 21₁ to 21₃. In case the light emitting diode unit 21n is arrayed so that its longitudinal direction is the transverse direction of the backlight enclosure 120, as with the light emitting diode units 21₄ to 21₇, the number of the light source units for backlight needs to be less than four.
The present invention is not limited to the species of the LEDs used. The light emitting diodes 21 used may be the aforementioned side emission LEDs, or may also be so-called bullet type LEDs routinely used. The present invention may be flexibly applied as the arraying pitch on a substrate 122 is adjusted, or a lens is provided for making adjustment for achieving desired light emission characteristics, depending on the light emission characteristics of the LEDs used as the light emitting diodes 21.
The present invention is not limited to the particular configurations of the embodiments described above with reference to the drawings. It will be appreciated that the present invention may encompass various changes or corrections such as may readily be arrived at by those skilled in the art within the scope and the principle of the invention.

The claims of the present application EP 05788184.9 are reproduced below, but are not the claims of this divisional application.
1. A light source unit for backlight constituting a liquid crystal display backlight light source device for illuminating a transmissive color liquid crystal display panel from a backside thereof, said light source unit for backlight comprising:
   three green (G) light emitting diodes, two red (R) light emitting diodes and two blue (B) light emitting diodes;
   three prime color light beams (R, G, B) radiated from the seven light emitting diodes being mixed, the resulting light being radiated, with said seven light emitting diodes as one unit.
2. The light source unit for backlight according to claim 1 said seven light emitting diodes are arrayed in two rows of GRBG and BGR.
3. The light source unit for backlight according to claim 1 wherein said seven light emitting diodes are arrayed in two rows of GBRG and RGB.
4. The light source unit for backlight according to claim 1 wherein said light emitting diode is a side emission light emitting diode provided with an optical component for radiating light radiated from a light source from a lateral side thereof.
5. The light source unit for backlight according to claim 1 wherein said seven light emitting diodes are arrayed in a sole row of GRBGBRG.
6. The light source unit for backlight according to claim 1 wherein said seven light emitting diodes are arrayed in a sole row of GBRGRBG.
7. The light source unit for backlight according to claim 1 wherein said seven light emitting diodes as said one unit are encircled by a reflecting plate and wherein three prime color light beams (R, G, B) radiated from said seven light emitting diodes are locally mixed together and the resulting light is radiated.
8. A liquid crystal display backlight light source device for illuminating a transmissive color liquid crystal display panel from the backside thereof, said liquid crystal display backlight light source device comprising:
   a plural number of light source units for backlight, each of said light source units for backlight including three green (G) light emitting diodes, two red (R) light emitting diodes and two blue (B) light emitting diodes, as one unit, each of said light source units for backlight mixing three prime color light beams (R, G, B) radiated from said seven light emitting diodes together to radiate the resulting light.
9. The liquid crystal display backlight light source device according to claim 8 wherein the seven light emitting diodes in said light source unit for backlight are arrayed in two rows of GRBG and BGR.
10. The liquid crystal display backlight light source device according to claim 8 wherein the seven light emitting diodes in said light source unit for backlight are arrayed in two rows of GBRG and RGB.
11. The liquid crystal display backlight light source device according to claim 8 wherein said light source units for backlight are one or more first light source units for backlight, each made up of the seven light emitting diodes arranged in a row of GRBG and a row of BGR, and one or more second light source units for backlight, each made up of the seven light emitting diodes arranged in a row of GBRG and a row of RGB, said first and second light source units being arranged in combination in an optional sequence.
12. The liquid crystal display backlight light source device according to claim 11 wherein a plurality of said first light source units for backlight as one set and a plurality of said second light source units for backlight as one set are arranged alternately set by set along the longitudinal direction.
13. The liquid crystal display backlight light source device according to claim 12 wherein an even number of sets of said first light source units for backlight and an even number of sets of said second light source units for backlight are arranged so that light emitting diodes radiating the same color light are arranged at both ends along said longitudinal direction.
14. The liquid crystal display backlight light source device according to claim 8 wherein said light source unit for backlight is made up of said seven light emitting diodes arranged in a row of GRBGBRG.
15. The liquid crystal display backlight light source device according to claim 8 wherein said light source unit for backlight is made up of said seven light emitting diodes arranged in a row of GBRGRBG.
16. The liquid crystal display backlight light source device according to claim 8 wherein said light source units for backlight are one or more third light source units for backlight, each made up of the seven light emitting diodes arranged in a row of GRBGBRG, and one or more fourth light source units for backlight, each made up of the seven light emitting diodes arranged in a row of GBRGRBG, said third and fourth light source units being arranged in combination in an optional sequence.
17. The liquid crystal display backlight light source device according to claim 8 wherein said seven light emitting diodes as said one unit are encircled by a reflecting plate and wherein said three prime color light beams (R, G, B) radiated from said seven light emitting diodes are locally mixed together and the resulting light is radiated.
18. The liquid crystal display backlight light source device according to claim 8 wherein said light emitting diode is a side emission light emitting diode provided with an optical component for radiating light radiated from a light source from a lateral side thereof.
19. A transmissive color liquid crystal display apparatus, formed by a transmissive color liquid crystal panel and a liquid crystal display backlight light source device for illuminating said transmissive color liquid crystal display panel from a backside thereof, wherein
   said liquid crystal display backlight light source device includes a plurality of light source units each made up by three green (G) light emitting diodes, two red (R) light emitting diodes and two blue (B) light emitting diodes, as one unit, three prime color light beams (R, G, B) radiated from these seven light emitting diodes being mixed together, the resulting light being radiated.
20. The transmissive color liquid crystal display apparatus according to claim 19 wherein said light source unit for backlight is formed by seven light emitting diodes are arrayed in two rows of GRBG and BGR.
21. The transmissive color liquid crystal display apparatus according to claim 19 wherein said light source unit for backlight is formed by seven light emitting diodes are arrayed in two rows of GBRG and RGB.
22. The transmissive color liquid crystal display apparatus according to claim 19 wherein said light source units for backlight are one or more first light source units for backlight, each made up of the seven light emitting diodes arranged in a row of GRBG and a row of BGR, and one or more second light source units for backlight, each made up of the seven light emitting diodes arranged in a row of GBRG and a row of RGB, said first and second light source units being arranged in combination in an optional sequence.
23. The transmissive color liquid crystal display apparatus according to claim 22 wherein a plurality of said first light source units for backlight as one set and a plurality of said second light source units for backlight as one set are arranged alternately set by set along the longitudinal direction.
24. The transmissive color liquid crystal display apparatus according to claim 23 wherein an even number of sets of said first light source units for backlight and an even number of sets of said second light source units for backlight are arranged so that light emitting diodes radiating the same color light are arranged at both ends along said longitudinal direction.
25. The transmissive color liquid crystal display apparatus according to claim 19 wherein said light source unit for backlight is made up of said seven light emitting diodes arranged in a row of GRBGBRG.
26. The transmissive color liquid crystal display apparatus according to claim 19 wherein said light source unit for backlight is made up of said seven light emitting diodes arranged in a row of GBRGRBG.
27. The transmissive color liquid crystal display apparatus according to claim 19 wherein said light source units for backlight are one or more third light source units for backlight, each made up of the seven light emitting diodes arranged in a row of GRBGBRG, and one or more fourth light source units for backlight, each made up of the seven light emitting diodes arranged in a row of GBRGRBG, said first and second light source units being arranged in combination in an optional sequence.
28. The transmissive color liquid crystal display apparatus according to claim 19 wherein said seven light emitting diodes as said one unit are encircled by a reflecting plate and wherein said three prime color light beams (R, G, B) radiated from said seven light emitting diodes are locally mixed together, the resulting light being radiated.
29. The transmissive color liquid crystal display apparatus according to claim 19 wherein said light emitting diode is a side emission light emitting diode provided with an optical component for radiating light radiated from a light source from a lateral side.

## Claims

1. A liquid crystal display backlight light source device for illuminating a transmissive color liquid crystal display panel from the backside thereof, said liquid crystal display backlight light source device comprising:
a plural number of light emitting diodes arrayed on a substrate in two rows of equal pitch, the arraying periods of which are shifted relative to each other by one-half pitch,
wherein the light emitting diodes are divided into units, separated from each other by reflecting planes, such that each unit is a trapezoidal shape.

2. A device according to claim 1, wherein for each unit the trapezoidal shape is inverted with respect to its nearest neighbouring unit or units along the longitudinal direction of the rows.

3. A device according to claim 1 or 2, wherein each unit comprises an odd number of light emitting diodes.

4. A device according to claim 1, 2 or 3, wherein each unit comprises two red, two green and one blue light emitting diodes.

5. A device according to claim 1i, 2 or 3, wherein each unit comprises three green, two red and two blue light emitting diodes.

6. A device according to claim 1, 2 or 3, wherein each unit comprises three red, four green and two blue light emitting diodes.

7. A device according to claim 1, 2 or 3, wherein each unit comprises four red, four green and three blue light emitting diodes.

8. A device according to claim 1, 2 or 3, wherein each unit comprises three red, five green and three blue light emitting diodes.

9. A device according to any one of claims 1 to 8, wherein three prime color light beams R, G, B radiated from said light emitting diodes in a unit are locally mixed together and the resulting light is radiated.

10. A device according to any one of claims 1 to 9, wherein each said light emitting diode is a side emission light emitting diode provided with an optical component for radiating light radiated from a light source from a lateral side thereof.

11. A transmissive color liquid crystal display apparatus, formed by a transmissive color liquid crystal panel and a liquid crystal display backlight light source device for illuminating said transmissive color liquid crystal display panel from a backside thereof, wherein
said liquid crystal display backlight light source device is according to any one of claims 1 to 10.
